(19) Europäisches Patentamt
European Patent Office
Office européen des brevets

(11) EP 4 253 086 A1

(12) EUROPEAN PATENT APPLICATION
published in accordance with Art. 153(4) EPC

(43) Date of publication:
**04.10.2023 Bulletin 2023/40**

(21) Application number: **22880447.2**

(22) Date of filing: **14.11.2022**

(51) International Patent Classification (IPC):
***B60C 9/02*** (2006.01) ***B60C 9/18*** (2006.01)
***B60C 15/04*** (2006.01) ***B60C 17/06*** (2006.01)

(52) Cooperative Patent Classification (CPC):
**B60C 9/02; B60C 9/18; B60C 15/04; B60C 17/06;**
Y02T 10/86

(86) International application number:
**PCT/CN2022/131664**

(87) International publication number:
**WO 2023/061511 (20.04.2023 Gazette 2023/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.01.2022 CN 202210099470**
**27.01.2022 CN 202210099281**
**27.01.2022 CN 202220235581 U**

(71) Applicant: **Qingdao Doublestar Tire Industrial Co., Ltd.**
**Qingdao, Shandong 266000 (CN)**

(72) Inventors:
- **CHAI, Yongsen**
  **Qingdao, Shandong 266000 (CN)**
- **WANG, Jun**
  **Qingdao, Shandong 266000 (CN)**
- **XU, Wei**
  **Qingdao, Shandong 266000 (CN)**
- **ZHANG, Junhua**
  **Qingdao, Shandong 266000 (CN)**
- **SU, Ming**
  **Qingdao, Shandong 266000 (CN)**
- **DENG, Ling**
  **Qingdao, Shandong 266000 (CN)**
- **ZHANG, Lin**
  **Qingdao, Shandong 266000 (CN)**
- **LIU, Jifa**
  **Qingdao, Shandong 266000 (CN)**
- **LIU, Jie**
  **Qingdao, Shandong 266000 (CN)**
- **WANG, Yujian**
  **Qingdao, Shandong 266000 (CN)**
- **HAN, Fengjin**
  **Qingdao, Shandong 266000 (CN)**
- **HAN, Lei**
  **Qingdao, Shandong 266000 (CN)**
- **MA, Lihua**
  **Qingdao, Shandong 266000 (CN)**
- **REN, Zhenxing**
  **Qingdao, Shandong 266000 (CN)**
- **WANG, Wei**
  **Qingdao, Shandong 266000 (CN)**
- **ZHANG, Chenxi**
  **Qingdao, Shandong 266000 (CN)**
- **SUN, Chao**
  **Qingdao, Shandong 266000 (CN)**
- **MENG, Zhaohong**
  **Qingdao, Shandong 266000 (CN)**

(74) Representative: **Zaboliene, Reda Metida**
**Business center Vertas**
**Gyneju str. 16**
**01109 Vilnius (LT)**

# (54) SUPPORT RUBBER, AND INTERNAL SELF-SUPPORTING TIRE SUITABLE FOR WHOLE SERIES OF PASSENGER VEHICLES AND FORMING PROCESS FOR INTERNAL SELF-SUPPORTING TIRE

(57) The present application discloses a support rubber, an internal self-supporting tire suitable for all series of passenger vehicles, and a building process therefor, and belongs to the field of internal self-supporting tires. The support rubber is of a trapezoid with a thickness of 4-12 mm, and a width of an upper bottom of the trapezoid is 0.5-1 mm. When the support rubber provided by the present application is applied to tires, technical problems of stress concentration when running at zero air pressure, incapability of guaranteeing both of endurance at zero

EP 4 253 086 A1

air pressure and comfortability during driving under a normal tire pressure, not being able to adapt to all types of vehicles and small application range occurred due to defects of the structure of a support rubber used in a prior internal self-supporting tire in are solved, and the internal self-supporting tire has characteristics of good endurance at zero air pressure, comfortability and suitable for all series of passenger vehicles.

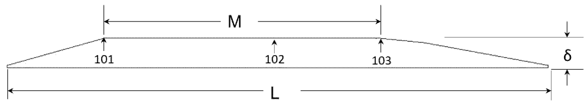


Fig. 2

## Description

### CROSS REFERENCE TO RELATED APPLICATIONS

The present application claims priority to the Chinese Patent Application No. 202210099470.2 entitled "Internal Self-supporting Tire Suitable for All Series of Passenger Vehicles and Building process Therefor", the Chinese Patent Application No. 202210099281.5 entitled "Support rubber and Run-flat Tire", and the Chinese Patent Application No. 202220235581.7 entitled "Two-layer Support Air Loss Building Drum", which are filed to the Chinese Patent Office on January 27, 2022, the entire contents of which are incorporated herein by reference.

### TECHNICAL FIELD

The present application belongs to the field of internal self-supporting tires, in particular relates to a support rubber, an internal self-supporting tire suitable for all series of passenger vehicles, and a building process for the internal self-supporting tire.

### BACKGROUND

With the rapid development of science and technology and the increase of people's requirements for automotive performances, tires with ordinary performances can no longer meet people's requirements for performances such as safety, comfortability, and quietness. The endurance of an existing self-supporting tire at zero air pressure is guaranteed by adding strong and hard support rubbers to sidewall areas. However, the quietness and comfortability of the tire are sacrificed at the same time, which results in poor driving experience from drivers and passengers. In addition, the existing self-supporting tire has higher requirements for an adaptive automotive suspension, so that it can be only applied within a small range and unable to be adapted to all series of passenger vehicles.

Due to various defects in design of a support rubber structure of the existing self-supporting tire, for sidewalls of the tire, the radial rigidity is greater than the radial elasticity during use. Although the endurance at zero air pressure can be achieved, the quietness and comfortability during driving under a normal tire pressure are poor, which results in poor driving experience from drivers and passengers. In addition, due to the uneven thickness design of the support rubber, stress concentration will be occurred when driving at zero air pressure, which results in the problem of rapid heat generation.

### SUMMARY

In order to solve at least one of the above-mentioned technical problems existing in the prior art, a first aspect of an embodiment of the present application provides a support rubber, wherein the support rubber is of a trapezoid with a thickness of 4-12 mm; and a width of an upper bottom of the trapezoid is 0.5-1 mm.

In some embodiments of the present application, a rubber hardness of the support rubber is HS60 to HS70.

In some embodiments of the present application, a rubber elastic modulus of the support rubber is 4-6 MPa.

In some embodiments of the present application, a width L of a lower bottom of the trapezoid is calculated by the following formula:

$$L=SW*N*k+L2 \qquad (1)$$

Wherein, SW is a nominal section width of a tire; N is an aspect ratio of the tire; k is a Safort factor which has a value within a range of 0.73-0.75; and L2 is a distance of the support rubber inserted below a belt.

A second aspect of an embodiment of the present application provides an internal self-supporting tire suitable for all series of passenger vehicles, comprising a support body, wherein the support body comprises:

- a support rubber which is of a trapezoid with a thickness of 4-12 mm;
- an apex located on an outer side of a carcass and then covered by the carcass, a lower endpoint of the apex is attached to a bead core, and an upper endpoint of the apex is located at 1/3 to 2/5 of a radial width L of the support rubber; and
- a reinforcing layer, a radial height L3 of an upper endpoint of the reinforcing layer higher than the upper endpoint of the apex is 5-10 mm, and a lower endpoint of the reinforcing layer is flush with a top of the bead core.

In some embodiments of the present application, an insertion distance L2 of the support rubber after an upper endpoint of the support rubber is inserted below a belt is 18-24 mm; and a distance L6 from a lower endpoint of the support rubber to an upper endpoint of the bead core is 5-10 mm.

In some embodiments of the present application, L2-L1≥10 mm, and L1 is a difference of a distance of a sidewall inserted below the belt and a distance of the support rubber inserted below the belt.

In some embodiments of the present application, a thickness H4 of the apex at 1/8 of the radial width L of the support rubber from a lower endpoint of the support rubber is 3-4 mm, and a difference of a bottom thickness H5 of the apex and the H4 is not greater than 2 mm.

In some embodiments of the present application, a width L of a lower bottom of the support rubber is calculated by the following formula:

$$L=SW*N*k+L2 \quad (1)$$

Wherein, SW is a nominal section width; N is an aspect ratio; k is a Safort factor which has a value within a range of 0.73-0.75.

In some embodiments of the present application, a value of α is within a range of 65º-75º, wherein α refers to an included angle between a connecting line of an endpoint of a rim width of a contour and an endpoint of a section width of the contour and a horizontal axis of a highest point of the contour of a tire section.

In some embodiments of the present application, the contour is designed by adopting a triangular balance theory design principle to ensure that:

$$\tan\alpha=2USH/(SW-RW) \quad (2)$$

wherein, SW is a nominal section width with a fixed value, USH is a distance from a horizontal axis of the tire section to a bead in a free state, and RW is the rim width.

In some embodiments of the present application, a deflection h is calculated by the following formula:

$$h=\tan\beta*TDW/2 \quad (3)$$

wherein, TDW is a designed tread width, and a value of β is within a range of 3º-8º.

A third aspect of an embodiment of the present application provides a building process for the internal self-supporting tire suitable for all series of passenger vehicles according to any one mentioned above, wherein a first stage two-layer building drum is adopted, the first stage two-layer building drum has a drum expansion state and a drum shrinkage state, and in the drum expansion state, attaching an inside liner, support rubbers and the carcass together, setting bead bundles and performing turn-up, and attaching sidewalls; and

the first stage two-layer building drum rotates at a rotating speed of 80±10 r/min, and a rear pressing roller pressure is kept at 2-2.5 bar and performing translational roll-pressing at a transverse speed of 5-15 mm/sec to complete the building process.

In some embodiments of the present application, the building drum comprises a large-diameter drum plate, a large-diameter drum plate adjusting ring, a small-diameter drum plate, and a small-diameter drum plate adjusting ring, wherein the large-diameter drum plate is connected with the small-diameter drum plate by a T-shaped bolt, the large-diameter drum plate adjusting ring cooperates with the large-diameter drum plate to adjust a use width of the large-diameter drum plate, the small-diameter drum plate adjusting ring cooperates with the small-diameter drum plate to adjust a use width of the small-diameter drum plate, and the use width X of the large-diameter drum plate is calculated by the following formula:

$$X=(1\#Belt-2*L2)+2N \quad (4)$$

1 #Belt is a design width of 1# belt, and N is a width of a building drum profile of the large-diameter drum plate and is selected within a range of 30mm≤N≤60mm according to a tire size; and

a central platform of the large-diameter drum plate is transitioned to a platform of the small-diameter drum plate on two sides by linear smooth slopes, an inclination angle γ of the platform is within a range of 10º-15º; the transitional position between the central platform and each of the slopes are designed to have a rounding radius which is 40 mm, and a edge of each of the slopes of the large-diameter drum plate is designed to have a small rounding radius which is 0.5 mm; each drum edge curve of the small-diameter drum plate is designed to be a buffer tangent arc transitioning between R1 and R2, and a radius ratio of R1 to R2 is 0.1.

In some embodiments of the present application, the building drum comprises a large-diameter drum plate, a small-diameter drum plate is contacted with a lower surface of the large-diameter drum plate, a width of a small-diameter platform of the small-diameter drum plate is greater than a width of a large-diameter platform of the large-diameter drum plate, two sides of an upper surface of the large-diameter drum plate are transitioned to a surface of the small-diameter drum plate by linear smooth slopes, two sides from an upper surface to a lower surface of the small-diameter drum plate are transitioned by a first arc R1 and a second arc R2, and the R1 is tangent to the R2.

In some embodiments of the present application, a use width X of the large-diameter drum plate is calculated by the following formula:

$$X=(1\#Belt-2*L2)+2N \qquad (4)$$

1 #Belt is a design width of 1 # belt, and N is a width of a building drum profile of the large-diameter drum plate and is selected within a range of 30mm≤N≤60mm according to a tire size.

In some embodiments of the present application, a large-diameter drum plate adjusting ring for adjusting a width of the large-diameter drum plate is disposed in a center of the large-diameter drum plate, and the large-diameter drum plate adjusting ring is set as a ring body around which a trapezoidal step is disposed; and a small-diameter drum plate adjusting ring for adjusting a width of the small-diameter drum plate is disposed in a center of the small-diameter drum plate, and the small-diameter drum plate adjusting ring is set as a ring body around which a trapezoidal step is disposed.

In some embodiments of the present application, an included angle $\gamma$ between each of slopes on two sides of the large-diameter drum plate and the surface of the small-diameter drum plate is set as 10º-15º.

In some embodiments of the present application, a radius ratio of the first arc to the second arc is R1/R2=0.1.

Compared with the prior art, the present disclosure has the beneficial effects that:

(1) according to the support rubber provided in at least one embodiment of the present application, by limiting the thickness of the support rubber, the performance balance of the rigidity and elasticity of the support rubber is achieved; and when applied to a tire, the supporting performance during running on flat can be guaranteed, there is no lack of radial elasticity of the sidewalls, which comply with the law of fuel efficiency, and at the same time, the shock absorption effect of the tire during normal running is guaranteed, the driving comfort performance is improved, and the application range of the tire is widened;

(2) according to the support rubber provided in at least one embodiment of the present application, by limiting the support rubber to be of the trapezoid and further limiting a width of an upper bottom of the trapezoid, the design of the platform ensures that edge damage of the support rubber due to a too thin end can be avoided when extruded during production, and the production efficiency is increased;

(3) the internal self-supporting tire suitable for all series of passenger vehicles provided in at least one embodiment of the present application is more comfortable, more fuel-efficient, and lower in noise as comparison with an ordinary run-flat tire, meets a user's requirement for support air loss, has no damage to a rim, and is suitable for all series of passenger vehicles;

(4) the building process for the internal self-supporting tire suitable for all series of passenger vehicles provided in at least one embodiment of the present application is beneficial to ensure reasonable attachment of the support rubbers, effectively reduce air bubbles generated in tire during building process and increase the production efficiency; and

(5) according to the building drum adopted in the building process provided in at least one embodiment of the present application, a small-diameter drum plate is added below the traditional large-diameter drum plate, and a width difference design is adopted between the large-diameter drum plate and the small-diameter drum plate, so that reasonable spaces are provided for the attachments of the support rubbers, and the technical problem that air bubbles are easy to generate in the tire cavity in a process of end attachments of the support rubbers during production is solved; in addition, the building drum has a drum expansion state and a drum shrinkage state, and bead bundles are set and turn-up is performed in the drum expansion state, so that the turn-up is more fittable.

## BRIEF DESCRIPTION OF DRAWINGS

The accompanying drawings described herein are provided for further understanding of the present application, and constitute a part of the present application. Exemplary embodiments and descriptions thereof in the present application are intended to explain the present application, rather than to constitute improper limitations on the present application. In the accompanying drawings:

Fig. 1 is a schematic structural diagram of a crescent-shaped support rubber in the prior art;

Fig. 2 is a schematic structural diagram of a support rubber in an embodiment of the present application;

Fig. 3 is a schematic diagram of tire radial deformation analysis by roll-pressing in an embodiment of the present application;

Fig. 4 is a rigidity and elasticity curves of support rubbers in different shapes in an embodiment of the present application;

Fig. 5 is a first schematic structural diagram of an internal self-supporting tire suitable for all series of passenger vehicles in an embodiment of the present application;

Fig. 6 is a second schematic structural diagram of the internal self-supporting tire suitable for all series of passenger vehicles in the embodiment of the present application;

Fig. 7 is a schematic structural diagram of contour design of the internal self-supporting tire suitable for all series of passenger vehicles in the embodiment of the present application;

Fig. 8 is a schematic structural diagram of a first stage two-layer building drum for the internal self-supporting tire suitable for all series of passenger vehicles in an embodiment of the present application; and

Fig. 9 is a schematic structural diagram of the building drum mounted on assembled parts of the building drum in an embodiment of the present application.

Description for the accompanying drawings: 1, support rubber; 101, position of endpoint of belt on support rubber; 102, position of widest point of tire section on support rubber; 103, position of radial upper endpoint of apex on support rubber; 11, upper endpoint of support rubber; 12, lower endpoint of support rubber; 2, apex; 21, upper endpoint of apex; 3, reinforcing layer; 31, upper endpoint of reinforcing layer; 4, bead core; 41, upper endpoint of bead core; 5, belt; 6, sidewall; 71, large-diameter drum plate; 711, large-diameter platform; 72, large-diameter drum plate adjusting ring; 73, small-diameter drum plate; 731, small-diameter platform; 74, small-diameter drum plate adjusting ring; 75, first bolt; 76, second bolt; and 8, assembled parts of building drum.

## DETAILED DESCRIPTION OF THE EMBODIMENTS

In order to make objects, technical solutions and advantages of the present application clearer and more understandable, the present application will be described and explained below in conjunction with the accompanying drawings and embodiments. It should be understood that the specific embodiments described herein are only intended to explain the present application, rather than to limit the present application. Based on the embodiments provided in the present application, all other embodiments obtained by those of ordinary skill in the art without creative work shall fall within the protection scope of the present application.

Apparently, the accompanying drawings in the following description only show some examples or embodiments of the present application. Those of ordinary skill in the art may further apply the present application to other similar situations without creative work according to these accompanying drawings. In addition, it can be further understood that efforts made in this development process may be complex and lengthy, however, for those of ordinary skill in the art related to the content disclosed in the present application, some changes such as design, manufacture or production based on the technical content disclosed in the present application are only conventional technical means, and should not be understood as that the content disclosed in the present application is insufficient.

"Embodiments" mentioned in the present application means that specific features, structures or characteristics described in conjunction with the embodiments may be included in at least one embodiment of the present application. The occurrence of a phrase at different positions in the description does not necessarily means the same embodiment or an independent or alternative embodiment mutually exclusive with other embodiments. It is explicitly and implicitly understood by those of ordinary skill in the art that the embodiments described in the present application may be combined with other embodiments without conflicts.

Unless otherwise defined, all technical and scientific terms involved in the present application should have the ordinary meanings as those understood by those of ordinary skill in the art to which the present application belongs. Words "a", "an", "the" and the like do not represent a quantitative limitation, and can represent a singular or plural number. Terms such as "include", "comprise", "having", and any variants thereof involved in the present application are intended to cover non-exclusive inclusion. For example, a process, method, system, product or device comprising a series of steps or modules (units) are not limited to the listed steps or units, but may further comprise steps or units which are not listed, or may further comprise other steps or units which are inherent for the process, method, product or device. The words "connection", "connected", "coupled" and the like involved in the present application are not limited to physical or mechanical connections, but may comprise electrical connections, whether direct or indirect. The "plurality" involved in the present application means two or more. "And/or" describes an association relationship between associated objects and means that there may be three relationships, for example, "A and/or B" may denote the three situations that A exists alone, A and B exists at the same time, and B exists alone. The character "/" generally denotes that the contextual objects are in an "or" relationship.

The "Max. thickness" in the present application refers to a thickness of a thickest point or a thickest platform of a support rubber. It can be understood that the structural or shape characteristics of the supporting rubber refer to structural or shape characteristics of an unvulcanized supporting rubber when being described alone.

Fig. 1 is a schematic structural diagram of a crescent-shaped support rubber in the prior art. A thickness of the traditional crescent-shaped support rubber is gradually reduced from a middle to edges (12mm≤H1<H3<H2<18mm), the Max. thickness is 12 mm or above, and when such a design is applied to a tire, the supporting performance of the tire running at zero air pressure can be guaranteed, however, due to the large Max. thickness, the radial rigidity of sidewall is too high during the use of such a support rubber, and shock absorption effect and comfortability are poor. H1 represents a thickness of the support rubber at a shoulder of the tire, H2 represents a thickness of the support rubber at a horizontal axis of a tire section, and H3 represents a thickness of the support rubber at an endpoint of an apex of the tire; and the thickness at H2 is the Max. thickness.

For above problems existing in the prior art, a first aspect of an embodiment of the present application provides a support rubber. Fig. 2 is a schematic structural diagram of the support rubber 1 in an embodiment of the present application. With reference to Fig. 2, the support rubber 1 is of a trapezoid with a thickness $\delta$ (that is, a height of the trapezoid in Fig. 1) of 4-12 mm; and a width of an upper bottom of the trapezoid is 0.5-1 mm. By limiting the thickness $\delta$ of the support rubber 1, a balance of the rigidity and elasticity of the support rubber 1 is achieved; when applied to tires, the supporting performance during running on flat can be guaranteed, there is no lack of radial elasticity of the sidewalls, which comply with the law of fuel efficiency, and at the same time, the shock absorption effect during normal running is guaranteed, the driving comfortability is improved, and the application range of the tire is widened.

Fig. 3 is a schematic diagram of a result obtained by simulation analysis for radial deformation of an ordinary tire (not provided with support rubbers) and tires (the thickness of the trapezoid in scheme A is 4 mm, the thickness of the trapezoid in scheme B is 6 mm, and the thickness of the trapezoid in scheme C is 5 mm) adopting the trapezoidal support rubbers in above-mentioned embodiment of the present application by roll-pressing. As shown in Fig. 3, the ordinary tire not provided with the support rubbers cannot be effectively supported due to insufficient strength of lower sidewalls; and when the support rubbers in the embodiment of the present application are adopted, due to the disposing of the support rubbers, lower sidewalls can provide effective support and have supporting capabilities at zero air pressure. It should be noted that a support rubber with a thickness of 4 mm is suitable for small-sized tire due to its smaller thickness.

In the embodiment of the present application, by limiting the support rubber 1 to be of the trapezoid and further limiting the width of the upper bottom of the trapezoid, a platform is formed on an end of the support rubber, and the design of the platform ensures that edge damage of the support rubber 1 due to a too thin end can be avoided when extruded during production, and the production efficiency is increased. In addition, compared with the existing crescent-shaped support rubber, the support rubber is designed to be of the trapezoid which provides a relative smooth transition for attachments of semi-components and reduces the phenomenon of turn-up end folding caused by an insufficient thickness of the end.

In the embodiment of the present application, the support rubber 1 is limited to be of the trapezoid, firstly, the trapezoid can guarantee the supporting capability of the tire at a zero air pressure due to its own stability, at the same time, a surface of the trapezoid is in smooth transition, which provides a smooth curved surface for the conduction of a force, kinetic energy generated by a load in a vertical direction can be effectively absorbed, and kinetic energy in a vertical direction of the tire can be converted into heat and then dissipate it, then, vibration of the tire in a vertical direction can be effectively reduced, and the comfortability of the tire can be improved; and two ends of the support rubber are of regular triangles which may be inserted between components and be easily attached together with other components when used in combination with the components such as an apex, a carcass and a belt, thus, the air bubble rate of a tire cavity is reduced during production, vulcanization delamination is avoided, and the production efficiency is increased. In addition, in the embodiment of the present application, the thickness of the trapezoid is further limited, as shown in Fig. 4, within a thickness range limited by the present application, when an absolute value of a slope K of the radial rigidity and the radial elasticity curve is minimum, the supporting performance and the comfortability can be guaranteed at the same time, and at the same time, an application range of the tire is widened. Specifically, comprehensive requirements for the supporting performance, the comfortability and noise of a run-flat tire having different requirements for the thickness of the support rubber 1 due to different road conditions and vehicle types may be met. It can be understood that the above-mentioned thickness may also be 5 mm, 6 mm, 7 mm, 8 mm, 9 mm, 10 mm, 11 mm, and any point value within its range, and the width of the upper bottom may also be 0.6 mm, 0.7 mm, 0.8 mm, 0.9 mm, and any point value within its range.

In some embodiments, a rubber hardness of the support rubber 1 is HS60 to HS70 (Shore hardness), and a rubber elastic modulus of the support rubber 1 is 4-6 MPa. It can be understood that the rubber elastic modulus may also be 4.2 MPa, 4.4 MPa, 4.6 MPa, 4.8 MPa, 5.0 MPa, 5.2 MPa, 5.4 MPa, 5.6 MPa, 5.8 MPa, and any point value within above-mentioned range. Due to constraints in thickness and shape of the traditional crescent-shaped support rubber, the requirement on performance of the rubber is strictly, and the hardness of the rubber is required to be kept at HS75 or above, which results in poor flexural resistance and stress concentration during application, and therefore, the rubber generate more heat during compression. In the embodiments of the present application, by optimizing the shape and size of the support rubber 3, an equal-thickness trapezoidal support rubber 3 is designed, and due to the stability of its shape, the supporting performance in use can be meet when the rubber hardness is within the range of HS60 to HS70, and the support rubber is good in flexural resistance, dispersible in stress distribution when in use, and less in heat generated during compression.

In some embodiments, a width L of a lower bottom of the trapezoidal support rubber 1 is calculated by the following formula:

$$L=SW*N*k+L2 \qquad (1)$$

wherein, SW is a nominal section width of a tire; N is an aspect ratio of the tire; k is a Safort factor which has a value within a range of 0.73-0.75; and L2 is a distance of the support rubber 1 inserted below a belt. Optionally, L2 is 8%-15% of a tread width. In the present embodiment, the width L of the lower bottom is specifically limited, and the distance L2 of the support rubber 1 inserted below the belt is further limited. Specifically, the tread width is designed according to the size of the tire, the insertion distance of the support rubber 1 is 8%-15% of the designed tread width, and such a design can guarantee a high-speed performance and a contact shape of the support rubber 1 in use. If the insertion distance of the support rubber 1 is less than 8%, a tail end of the belt will deform and become abnormal, and a tread will be uneven, which will directly affect the contact shape of the tire; and if the insertion distance of the support rubber 1 is greater than 15%, heat will generated too fast during high-speed running, and thus, the high-speed performance of the tire cannot be met.

In some embodiments, a width M of an upper bottom of the trapezoidal support rubber 1 is calculated by the following formula:

$$M=L-L2-L3 \qquad (5)$$

wherein L3 is 12%-25% of the width of the apex. It should be noted that if the value of L3 is less than 12% of the width of the apex, the support rubber 1 is thick at a bead area, which results in overhigh rigidity of the bead area and high in torsional rigidity of the tire, so that abnormal noise is easy to occur during steering of a vehicle, which will affect the driving experience; and if the value of L3 is greater than 25% of the width of the apex, the support rubber 1 is thin at the bead area so as not to have the supporting performance at zero air pressure.

There are problems such as overhigh thickness, overhigh hardness and high heat generation in the traditional support rubber of the internal self-supporting tire to result in high noise, high fuel consumption and poor comfortability of the tire, and therefore, only some vehicles adopting specially-designed suspension systems are originally equipped with internal self-supporting tires, but other passenger cars cannot use or are not recommended to use ordinary internal self-supporting tires. In an embodiment of the present application, by optimizing the support rubber 1, the radial rigidity is equal to the radial elasticity at the sidewall, so that the technical problem that the rigidities of the sidewalls are overhigh when adopt ordinary support rubbers is solved, and at the same time, the technical problem that the shoulders are easy to damage due to rapid heat generation caused by stress concentration when running at zero air pressure is solved. During use, the upper bottom of the trapezoidal support rubber 1 is contacted with a carcass, and the lower bottom of the trapezoidal support rubber 1 is contacted with an inside liner.

A second aspect of an embodiment of the present application provides an internal self-supporting tire suitable for all series of passenger vehicles, and Fig. 5 and Fig. 6 are schematic structural diagrams of an internal self-supporting tire suitable in an embodiment of the present application.

As shown in Fig. 5 and Fig. 6, the internal self-supporting tire provided in the embodiment of the present application sequentially comprises an inside liner, a carcass, a belt 5, a cap ply and a tread from inside to outside at the crown, sequentially comprises the inside liner, the support rubber 1, the carcass and a sidewall 6 from inside to outside at each of sidewall portions, and comprises a bead core 4 located in the center and an apex 2 located above the bead core 4 at a bead, the carcass covers the apex 2 and the bead core 4, and a reinforcing layer 3 is disposed on an outer side of the carcass. Other necessary semi-components not mentioned in the present application refer to the prior art, and will not be repeated in the present application. It should be noted that L1, L2, ..., L5 and L6 in Fig. 6 represent actual distances (arc lengths) between two points of corresponding semi-components, rather than linear distances, and the following "radial width L" for the support rubber of the tire is the above-mentioned width L of the lower bottom of the trapezoidal support rubber, rather than a radial linear distance.

With reference to Fig. 5 and Fig. 6, the internal self-supporting tire at least comprises a support body, wherein the support body comprises the support rubber 1, the apex 2, and the reinforcing layer 3. In an embodiment of the present application, due to the design of the support body, when the tire is flat, the supporting effect for the sidewall 6 can be effectively improved, stress concentration on the sidewall 6 is avoided, the tire can still run for 60 km at a speed of 60 km/h at zero air pressure, at the same time, a combination of such flexible support body can effectively relieve tire cavity resonance to further play a role in effectively reducing the noise of the tire, and the tire is adaptive to all series of passenger vehicles. Specifically, as shown in Fig. 2, the support rubber 1 is of a trapezoid with a thickness of 4-12 mm, whereas, a traditional support rubber 1 is crescent-shaped. In the embodiment of the present application, the crescent is changed into the trapezoid, due to its own stability of the trapezoid, a smooth curved surface is provided for the conduction of a force, kinetic energy generated by a load in a vertical direction can be effectively absorbed, kinetic energy in a vertical direction of the tire can be converted into heat and then dissipate it, thus, vibration of the tire in a vertical direction can be effectively reduced, and the comfortability of the tire can be improved. Further, in the embodiment of the present application, a thickness, which is gradually reduced from the middle to edges (12mm≤H1<H3<H2≤18mm), of the traditional support rubber is changed to be an equal thickness (4mm≤H1=H2=H3≤12mm), and the Max. thickness is adjusted from 12 mm-18 mm to 4 mm-12 mm, so that the support rubber 1 is reduced in overall thickness and improved in flexibility; the sidewall 6 is increased in longitudinal elasticity and uniform in thickness, so that stress concentration on the shoulder is dispersed and is transferred downwards to the sidewall 6, heat generated by stress concentration is favorably dissipated, the endurance of the tire at zero air pressure is improved; and when running at normal atmospheric pressure, because of the increased longitudinal elasticity, the shock absorption effect is good and the rim is not easy to be damaged, thus the tire is suitable for all series of passenger vehicles.

Optionally, an insertion distance L2 of the support rubber after an upper endpoint 11 of the support rubber is inserted below the belt 5 is 18-24 mm; a distance L6 from a lower endpoint 12 of the support rubber to an upper endpoint 41 of the bead core is 5-10 mm; and at the same time, it is ensured that L2-L1≥10 mm, and L1 is a difference of a distance of the sidewall 6 inserted below the belt 5 and a distance of the support rubber 1 inserted below the belt 5. When L2<18 mm, the support rubber 1 is inserted for a too short distance, a load of the shoulder at zero air pressure cannot be supported, and the supporting performance is poorer; and when L2>24 mm, the support rubber 1 is inserted for a too long distance, which results in a fact that an average grounding length of the crown is less than an average grounding length of the shoulder, the contact shape is similar to a butterfly shape, such a shape has better controllability during cornering, but has a very poor linear running performance and can further result in abnormal wear on the shoulder at the same time and shorten the service life of the tire. In the present embodiment, by limiting the shape, size and position of the support rubber 1, the technical problems of poor quietness and comfortability and high fuel consumption of ordinary run-flat tires are solved.

The apex 2 is located on an outer side of the carcass and is covered by the carcass, and a lower endpoint of the apex 2 is tightly attached to the bead core 4. In some embodiments, an upper endpoint 21 of the apex is located at 1/3 to 2/5 of the radial width L of the support rubber 1, that is, a radial distance from the upper endpoint 21 of the apex to the lower endpoint 12 of the support rubber 1 is L4, and L4=(1/3-2/5)*L. When L4<1/3L, the apex 2 cannot support the load on the bead area and becomes poor in shock absorption capability due to the weakening of the supporting performance; and when L4>2/5L, stress strain energy of the apex 2 is increased, and excessive heat is generated during running which results in ply separation. In the present embodiment of the present application, by positioning design for the apex 2, a height of the apex 2 is adjusted according to the thickness of the support rubber 1, so that the support rubber 1 may cooperate with the apex 2 to form an effective support system, the overall supporting performance of the sidewall 6 is improved, a good stretching space is provided for the apex 2, the stress strain energy can be effectively reduced while the load is supported, the endurance and stability at zero air pressure are guaranteed, at the same time, the shock absorption capability can also be improved, the rim is effectively protected, the good driving comfortability is provided, and the support body is suitable for all series of passenger vehicles.

In some embodiments, a thickness H4 of the apex 2 at 1/8 of the radial width L of the support rubber 1 from a lower endpoint of the support rubber 1 is 3-4 mm, and a difference of a bottom thickness H5 of the apex 2 and H4 of the apex 2 is not greater than 2 mm. It is found by tests that a position of the apex 2 at 1/8 of the radial width L of the support rubber 1 from the lower endpoint of the support rubber 1 is a position where the stress is relatively concentrated on the bead area; and when the thickness of H4 of the apex 2 is designed to be less than 3 mm, the bead area cannot support the load at zero air pressure and weak in supporting capability; when H4 is greater than 4 mm, the apex 2 is increased in thickness, enhanced in rigidity, poor in deformation and incapable of conducting a shear stress of the bead area, resulting in concentrated heat generation at the bead area and the apex 2 is easy to fracture transversely; and when H5-H4>2 mm, it cannot be ensured that the thickness of the apex 2 is uniformly transitioned, so that the control stability becomes poor, and the apex 2 cannot be suitable for all series of passenger vehicles. In the present embodiment, by limiting the size and position of the apex 2, the technical problems of transverse fracture and ply separation which are easy to occur on the apex 2 during running at zero air pressure is solved, the shock absorption capability can be improved, the rim is effectively protected, the good driving comfortability is provided, and thus it is suitable for all series of passenger vehicles.

A radial height L3 of an upper endpoint 31 of the reinforcing layer 3 higher than the upper endpoint 21 of the apex 2 is 5-10 mm, and a lower endpoint of the reinforcing layer 3 is flush with a top of the bead core 4. Due to such a design, the strength of the bead area can be enhanced, defects such as bead area cracking are effectively avoided, so that the service life is prolonged, the bead area of the tire is effectively protected, at the same time, the flexible transition of the bead area is enhanced to achieve a force dispersion effect, which greatly improves the driving comfortability.

In some embodiments, a width L of a lower bottom of the support rubber 1 is calculated by the following formula:

$$L=SW*N*k+L2 \qquad (1)$$

wherein, SW is a nominal section width; N is an aspect ratio; k is a Safort factor which has a value within a range of 0.73-0.75. The present embodiment provides a calculation method for a width L of a lower bottom of a support rubber 1 and limits a range of the value of the Safort factor due to a fact that when k<0.73, the support rubber 1 is designed to be relatively narrow, so that it cannot support load at zero air pressure or low air pressure and cannot achieve a good supporting performance at zero air pressure; when k>0.75, the support rubber 1 is designed to be excessively wide, by which the weight of the tire itself is increased, the fuel-efficient effect is poor, the materials cannot be efficiently utilized, which does not comply with the law of fuel efficiency and is not suitable for all series of passenger vehicles; and when k is controlled within the range of 0.73-0.75, the above-mentioned phenomena can be significantly improved. It should be noted that the Safort factor provided in the present application is suitable for the calculation of all-sized tires of the passenger cars, and the calculated values are consistent with those drawn in a material distribution drawing.

In the above-mentioned embodiment, it should be noted that, during the determination of the formula (1), design parameters with higher correlation with the width L of the lower bottom of the trapezoid are selected from all design parameters of the tire by a large number of correlation research tests, 147 tire sizes are selected in this process, and a relationship between L and each of the design parameters is tested respectively to find that SH (a height of the tire section) is most correlated, and SH is closely correlated to SW*N; and then, when linear regression simulation is performed by taking SH and L2 as x and L as y, in order to acquire a better linear relationship, the coefficient k is determined, and a range of the slope k is acquired as 0.73-0.75 by eliminating abnormal points through an orthogonal fitted curve, then, the formula (1) is determined, and thus, the width of the lower bottom of the support rubber can be rapidly calculated.

Optionally, head ends of two support rubbers 1 (i.e., upper endpoints of the support rubbers 1) are inserted below 1# belt 5, a distance between the head ends of the support rubbers 1 is L8=TDW-(10 mm-55 mm), and TDW is a designed tread width.

As shown in Fig. 7, the contour is designed by adopting a triangular balance theory design principle to ensure that:

$$\tan\alpha=2USH/(SW-RW) \qquad (2)$$

wherein, SW is a nominal section width with a value being determined by a corresponding tire size, USH is a distance from a horizontal axis of the tire section to a bead in a free state of the tire, RW is a rim width, and a value of $\alpha$ is within a range of 65º-75º, wherein $\alpha$ refers to an included angle between a connecting line of an endpoint A of the rim width of the contour and an endpoint B of a section width of the contour and a horizontal axis of a highest point of the contour of the tire section. When the value of $\alpha$ is smaller than 65º , the sidewall 6 is continuously squeezed by an inflation pressure during running, which easily results in radial deformation, so that the section contour of the tire greatly deforms during movement and is poor in control stability; and when the value of $\alpha$ is greater than 75º, the crown is excessively straightened in a transverse direction, which results in the increase of a flipping arm, the non-circularity of the tire and the increase of rolling resistance of the tire. By ensuring that the value of $\alpha$ is within the range of 65º-75º, an deformation state of the sidewall 6 under the compression of inflation pressure can be improved, a distance of the crown straightened along the transverse direction of the tread is shortened, so that the flipping arm is reduced and the real circularity is approached, and the rolling resistance of the tire is reduced. In addition, the higher rigidities of the crown and the sidewalls 6 are combined with a stable triangular structure, so that a section contour of the carcass is basically unchanged during running, and the control stability of the tire is improved.

As above, in order to achieve tana=2USH/(SW-RW), during contour design based on the triangular balance theory, in addition to adding the support rubbers in the embodiment of the present application, one or a combination of more than two of the following methods is also adopted for adjustment:

(1) a distance from the horizontal axis of the tire section to the bead in the free state of the tire is increased;
(2) the rim width is reduced; and
(3) a curvature of the shoulder contour is increased.

By adopting the above-mentioned triangular balance theory for contour design, while improving the rigidities of the sidewalls, carcass cords at the crown is tensioned and straightened, the rigidity of the crown is improved, and the stiffness of the crown and the sidewalls is improved as a whole, so that the deflection of the tire under a static load condition is reduced, the flipping arm is reduced and the real-circularity is approached, so as to achieve the purpose of reducing the rolling resistance of the tire. In addition, by using the above-mentioned design method, the crown and the sidewalls form the stable triangular structure, so that the section contour of the carcass is basically unchanged during rolling which improves the running stability of the tire; and when the tire is in a state of air leakage or zero air pressure, the support rubber further plays a role in bearing the self-gravity of a vehicle, thereby the safety performance of the tire is improved.

In some embodiments, a deflection h is calculated by the following formula:

$$h=\tan\beta*TDW/2 \quad (3)$$

wherein, TDW is a designed tread width, and a value of β is within a range of 3º-8º. It can be ensured that the contact shape is relatively rounded, and the control stability and quietness are effectively improved. Specifically, in the present embodiment of the present application, due to the design for the deflection h of the tire contour, it can be ensured that a curvature of the tread is increased, flexural areas of the shoulders running at zero air pressure are guaranteed, and damage caused by heat generation due to stress concentration of the shoulders running at zero air pressure is reduced; a height of a lower section is designed to be as large as possible to ensure that the tire is approximate to a real circle, and a rolling moment is reduced; and such a contour design provides support for lightweight design of the support rubber 1, so that the Max. thickness of the support rubber 1 may be adjusted from 15 mm or above to 4 mm-12 mm, and in cooperation with the thickness and positioning design of the apex 2, the technical problems of bead unseating that easily occurred at zero air pressure and not being able to adapt to different rim types are solved. In the present embodiment, the contour design cooperating with a Safort magic support structure is proposed, so that the section contour of the carcass is basically unchanged during rolling, and the control stability, the quietness and comfortability of the tire are improved.

A third aspect of an embodiment of the present application provides a building process for the internal self-supporting tire suitable for all series of passenger vehicles according to any one mentioned above. A first stage two-layer building drum is adopted, the first stage two-layer building drum has a drum expansion state and a drum shrinkage state, and in the drum expansion state, an inside liner, support rubbers 1 and a carcass are attached together, bead bundles are set thereon and turn-up is performed, and then sidewalls 6 are attached; and the first stage two-layer building drum rotates at a rotating speed of 80±10 r/min, and a rear pressing roller is kept at a pressure of 2-2.5 bar and performs translational roll-pressing at a transverse speed of 5-15 mm/sec to complete the building process. By setting the above-mentioned roll-pressing steps and roll-pressing parameters, gases between the carcass and each of the support rubbers 1 and an inner liner can be effectively discharged, the air bubble rate of a green tire is reduced by 85% or above, the labor intensity of repairing the green tire by artificial pinking is greatly lowered, the appearance quality of the green tire is greatly improved, and the production efficiency is increased.

Fig. 8 is a schematic diagram of a cross section of drum plates of the first stage two-layer building drum adopted by the embodiments of the present application. As shown in Fig. 8, in some embodiments, the building drum comprises a large-diameter drum plate 71, a large-diameter drum plate adjusting ring 72, a small-diameter drum plate 73, and a small-diameter drum plate adjusting ring 74, wherein the large-diameter drum plate 71 is connected with the small-diameter drum plate 73 by T-shaped bolts, the large-diameter drum plate adjusting ring 72 cooperates with the large-diameter drum plate 71 to adjust a use width of the large-diameter drum plate 71, and the small-diameter drum plate adjusting ring 74 cooperates with the small-diameter drum plate 73 to adjust a use width of the small-diameter drum plate 73. The use width X of the large-diameter drum plate 71 is expressed as:

$$X=(1\#Belt-2*L2)+2N \quad (4).$$

By limiting the use width of the large-diameter drum plate 71, it is beneficial to ensure reasonable attachments of the support rubbers 1, effectively reduce air bubbles generated in the tire cavity during building process and improve the production efficiency; and 1#Belt is a design width of 1 # belt 5, and N is a width of a building drum profile of the large-diameter drum plate 71 and is selected within a range of 30mm≤N≤60mm according to the tire size.

In some embodiments, a central platform (i.e., a large-diameter platform 711) of the large-diameter drum plate 71 is transitioned to a platform (i.e., a small-diameter platform 731) of the small-diameter drum plate 73 on two sides by linear smooth slopes, an inclination angle γ of each of the linear smooth slopes of the platform 711 is within a range of 10º-15º.

In some embodiments, the transitional position between the central platform (i.e., the large-diameter platform 711) and each of the slopes are designed to have a rounding radius R3 which is 40 mm, and a bottom edge of each of the slopes of the large-diameter drum plate 71 is designed to have a small rounding radius R4 which is 0.5 mm.

In some embodiments, each drum edge curve of the small-diameter drum plate 73 is designed to be a buffer tangent arc transitioning between R1 and R2, and a radius ratio of R1 to R2 is 0.1.

Further, for the value of N, the value of N for a series 35-50 is 30-40 mm; the value of N for a series 55-65 is 40-50 mm; and the value of N for a series 70-80 is 50-60 mm. The above-mentioned series are divided according to an aspect ratio of the tire, for example, 205/55R16 belongs to a series 55, and 225/45R17 belongs to a series 45; wherein, N is a width of a left bevel edge of the large-diameter drum plate 71 projected on a base of the large-diameter drum plate 71.

As shown in Fig. 8 and Fig. 9, in some embodiments, the building drum comprises a large-diameter drum plate 71, a small-diameter drum plate 73 is contacted with a lower surface of the large-diameter drum plate 71, a width of a small-diameter platform 731 of the small-diameter drum plate 73 is greater than a width of a large-diameter platform 711 of the large-diameter drum plate 71, the small-diameter drum plate 73 is buckled and pressed on an upper end of an assembled parts of building drum 8, two sides of an upper surface of the large-diameter drum plate 71 are transitioned to a surface of the small-diameter drum plate 73 by linear smooth slopes, two sides from an upper surface to a lower surface of the small-diameter drum plate 73 are transitioned by a first arc R1 and a second arc R2, and R1 is tangent to R2. In this way, the size of the large-diameter drum plate 71 may be smaller than that of a traditional large-diameter drum plate, so that reasonable spaces are provided for the attachments of the support rubbers, and the technical problem that air bubbles are easy to generate in the tire cavity in a process of end attachments of the support rubbers during production is solved.

In the present embodiment of the present application, the small-diameter drum plate is added below the traditional large-diameter drum plate, and a width difference design is adopted between the large-diameter drum plate and the small-diameter drum plate, so that reasonable spaces are provided for the attachments of the support rubbers, and the technical problem that air bubbles are easy to generate in the tire cavity in a process of end attachments of the support rubbers during production is solved. In addition, the building drum has a drum expansion state and a drum shrinkage state, and the bead bundles are set and turn-up is performed in the drum expansion state, so that the turn-up is more fittable.

The assembled parts of building drum 8 is an existing apparatus and comprises a driving mechanism which is connected with the large-diameter drum plate 71 and the small-diameter drum plate 73 and is capable of driving the large-diameter drum plate 71 and the small-diameter drum plate 73 to radially move along the building drum, so that the building drum has the drum expansion state and the drum shrinkage state, which may refer to the prior art, and will not be described in detail.

In some embodiments, a use width X of the large-diameter drum plate 71 is expressed as:

$$X=(1\#Belt-2*L2)+2N \qquad (4).$$

By limiting the width of the large-diameter drum plate 71, it is beneficial to ensure the reasonable attachments of the support rubbers 1, effectively reduce air bubbles generated in the tire cavity during building process and improve the production efficiency; and 1#Belt is a design width of 1# belt 5, and N is a width of a building drum profile of the large-diameter drum plate 71 and is selected within a range of $30mm \leq N \leq 60mm$ according to the tire size.

For the value of N, the value of N for a series 35-50 is 30-40 mm; the value of N for a series 55-65 is 40-50 mm; and the value of N for a series 70-80 is 50-60 mm. The above-mentioned series are divided according to an aspect ratio of the tire, for example, 205/55R16 belongs to a series 55, and 225/45R17 belongs to a series 45; wherein, N is a width of each of bevel edges on two sides of the large-diameter drum plate 71 projected on a base of the large-diameter drum plate 71.

In some embodiments, in order to meet production requirements of different types of products, a large-diameter drum plate adjusting ring 72 for adjusting a width of the large-diameter drum plate 71 is disposed in a center of the large-diameter drum plate 71, and the large-diameter drum plate adjusting ring 72 is set as a ring body around which a trapezoidal step is disposed; and a small-diameter drum plate adjusting ring 74 for adjusting a width of the small-diameter drum plate 73 is disposed in a center of the small-diameter drum plate 73, and the small-diameter drum plate adjusting ring 74 is set as a ring body around which a trapezoidal step is disposed. By disposing the large-diameter drum plate adjusting ring 72 and the small-diameter drum plate adjusting ring 74, an axial width of the building drum is adjustable.

In some embodiments, the large-diameter drum plate adjusting ring 72 and the small-diameter drum plate adjusting ring 74 are respectively inserted in the centers of the large-diameter drum plate 71 and the small-diameter drum plate 73. By replacing the large-diameter drum plate adjusting ring 72 and the small-diameter drum plate adjusting ring 74 with different widths, the axial width of a building drum surface is changed.

In some embodiments, the widths of large-diameter drum plate adjusting rings 72 and small-diameter drum plate adjusting rings 74 at different sizes are set at an interval of 4mm, for example, adjusting rings with widths 16 mm, 20 mm, 24 mm, ..., 100 mm are respectively disposed within a range of 16 mm-100 mm to meet the requirement for different widths of the building drum.

In some embodiments, in order to further reserve spaces for the attachments of the support rubbers, an included angle $\gamma$ between each of the slopes on two sides of the large-diameter drum plate 71 and the surface of the small-diameter drum plate 73 is set as 10º-15º.

In some embodiments, a radius ratio of the first arc to the second arc is R1/R2=0.1.

In some embodiments, the large-diameter drum plate 71 is connected with the small-diameter drum plate 73 by a first bolt 75, and the large-diameter drum plate adjusting ring 72 is connected with the small-diameter drum plate adjusting ring 74 by a second bolt 76.

During tests, the building drum rotates at a rotating speed of 80$\pm$10 r/min, and a rear pressing roller is kept at a pressure of 2-2.5 bar and performs translational roll-pressing at a transverse speed of 5-15 mm/sec. By setting the above-mentioned roll-pressing steps and roll-pressing parameters, gases between the carcass and each of the support rubbers and an inner liner can be effectively discharged, the air bubble rate of a green tire is reduced by 85% or above, the labor intensity of repairing the green tire by artificial pinking is greatly lowered, the appearance quality of the green tire is greatly improved, and the production efficiency is increased.

In the present application, products produced by adopting a special structural design, contour design, process and the like are more comfortable, more fuel-efficient and safer than an ordinary run-flat tire, meet a user's requirement for support air loss, have no damage to the rim, and are suitable for all series of passenger vehicles. Compared with an ordinary tire, the internal self-supporting tire suitable for all series of passenger vehicles in the embodiment of the present application can run for 60 km at a speed of 60 km/h at zero air pressure, it is enough for a vehicle to reach a nearby repair station, so that the vehicle does not need a spare tire anymore, and energy saving and emission reduction as well as low carbon and environmental protection are achieved.

**Performance tests**

1. Performance tests for support rubber

(1) Tests for supporting performance of equal-thickness trapezoid design

In test schemes provided in table 1, the support rubber 1 with a hardness of HS70 and an elasticity modulus of 5.4 MPa is selected.

Table 1 Test Schemes for Supporting Performance

| Position | Ordinary (mm) | Scheme A (mm) | Scheme B (mm) | Scheme C (mm) |
|---|---|---|---|---|
| Thickness (H1) of support rubber 1 on each shoulder | 0 | 4 | 6 | 5 |
| Thickness (H2) of each support rubber 1 on horizontal axis of tire section | 0 | 4 | 6 | 5 |
| Thickness (H3) of support rubber 1 on an endpoint of each apex | 0 | 4 | 6 | 5 |

As shown in Fig. 2, the point H1 101 is positioned on an endpoint of each side of belt after the support rubbers are inserted under the belt; the point H2 102 is positioned on about each widest point of the tire section (within the range of 5 mm upwards to 10 mm downwards); and the point H3 103 is positioned on a radial upper endpoint of each of the apexes. The thickness of point H2 102 is the Max. thickness of the trapezoid.

As shown in Fig. 3, it is known from the simulation results that the support rubber 1 has the supporting performance when the thickness thereof is greater than or equal to 4 mm.

(2) Tests for a relationship study on radial rigidity and radial elasticity with comfortability and supporting performance in combination with a rubber performance.

In test schemes provided in table 2, the support rubber 1 with a hardness of HS70 and an elasticity modulus of 5.8 MPa is selected.

Table 2 Schemes for Max. Thickness of Support rubbers with Different Shapes

| Shape schemes | Scheme 1 (mm) | Scheme 2 (mm) | Scheme 3 (mm) | Scheme 4 (mm) | Scheme 5 (mm) |
|---|---|---|---|---|---|
| Max. thickness of crescent | 15 | 13 | 10 | 6 | 5 |
| Max. thickness of rectangle | 15 | 13 | 10 | 6 | 5 |
| Max. thickness of | 15 | 13 | 10 | 6 | 5 |
| equal-thickness trapezoid | | | | | |

As shown in Fig. 4, it is known from a relationship curve that an absolute value of a slope K of a radial rigidity and radial elasticity curve is minimum for design of the equal-thickness trapezoid, thus both of the supporting performance and the comfortability can be guaranteed, and at the same time, comprehensive requirements for the supporting performance, the comfortability and noise of a run-flat tire having different requirements for the thickness of the support rubber 1 due to different road conditions and vehicle types.

2. Performance tests for internal self-supporting tires

The internal self-supporting tire suitable for all series of passenger vehicles in the embodiments of the present application is compared with a run-flat tire and an existing ordinary tire to obtain results shown as the following table 3.

Table 3 Results of Performance Tests

| Items | Existing ordinary tire | Existing run-flat tire | Internal self-supporting tire in the embodiment of the present application |
|---|---|---|---|
| Shape of support rubber 1 | / | crescent | equal-thickness trapezoid |
| Max. thickness of support rubber 1 | / | 15 mm | 8 mm |
| Height of each apex 2 | 40mm | 40 mm | 35 mm |
| Thickness H4 of each apex 2 | 3 mm | 5 mm | 3.5 mm |
| tan$\beta$ | 2 | 10 | 5 |
| tan$\alpha$ | 62 | 78 | 70 |
| Weight of tire | 11.2 | 14.1 | 13.4 |
| Endurance at indoor zero air pressure 60 kPh | / | 90 min | 60 min |
| Endurance of complete vehicle at zero air pressure 60 kPh | / | 70 min | 60 min |
| Comfortability | 7 | 6.5 | 7- |
| Controllability | 7 | 7 | 7 |

It is known by analyzing the performance test results in table 3 that the endurance test time of the tire provided in the embodiments of the present application at the indoor zero air pressure is 90 min, the endurance test time of the completely built up vehicle at zero air pressure is 70 min, and therefore, compared with the existing ordinary tires, the tire provided in the embodiments of the present application has supporting capability at zero air pressure and the comfortability thereof is one level higher than that of the existing ordinary run-flat tires.

All the technical features in the above-mentioned embodiments may be combined arbitrarily. For simplifying the description, possible combinations of the technical features in the above-mentioned embodiments are not all described. However, the combinations of these technical features shall fall within the scope recorded in the present description as long as they are no conflicts therein.

The above-mentioned embodiments only express several implementations of the present application, are described relatively specifically and in more detail, but should not be understood as limitations on the scope of the present application. It should be indicated that those of ordinary skill in the art may further make several variations and improvements without departing from the concept of the present application, and these variations and improvements shall fall within the protection scope of the present application.

## Claims

1. A support rubber, **characterized in that**, the support rubber is of a trapezoid with a thickness of 4-12 mm, and a width of an upper bottom of the trapezoid is 0.5-1 mm.

2. The support rubber according to claim 1, **characterized in that**, a rubber hardness of the support rubber is HS60 to HS70.

3. The support rubber according to claim 1, **characterized in that**, a rubber elastic modulus of the support rubber is 4-6 MPa.

4. The support rubber according to claim 1, **characterized in that**, a width L of a lower bottom of the trapezoid is calculated by the following formula:

$$L=SW*N*k+L2 \qquad (1),$$

wherein, SW is a nominal section width of a tire; N is an aspect ratio of the tire; k is a Safort factor which has a value within a range of 0.73-0.75; and L2 is a distance of the support rubber inserted below a belt.

5. An internal self-supporting tire suitable for all series of passenger vehicles, **characterized in that**, comprises a support body, and the support body comprises:

   a support rubber which is of a trapezoid with a thickness of 4-12 mm;
   an apex located on an outside of a carcass and then covered by the carcass, a lower endpoint of the apex is attached to a bead core, and an upper endpoint of the apex is located at 1/3 to 2/5 of a radial width L of the support rubber;
   a reinforcing layer, a radial height L3 of an upper endpoint of the reinforcing layer higher than the upper endpoint of the apex is 5-10 mm, and a lower endpoint of the reinforcing layer is flush with a top of the bead core.

6. The internal self-supporting tire suitable for all series of passenger vehicles according to claim 5, **characterized in that**, an insertion distance L2 of the support rubber after an upper endpoint of the support rubber is inserted below a belt is 18-24 mm, and a distance L6 from a lower endpoint of the support rubber to an upper endpoint of the bead core is 5-10 mm.

7. The internal self-supporting tire suitable for all series of passenger vehicles according to claim 6, **characterized in that**, $L2-L1 \geq 10$ mm, and L1 is a difference of a distance of a sidewall inserted below the belt and a distance of the support rubber inserted below the belt.

8. The internal self-supporting tire suitable for all series of passenger vehicles according to claim 5, **characterized in that**, a thickness H4 of the apex at 1/8 of the radial width L of the support rubber from a lower endpoint of the support rubber is 3-4 mm, and a difference of a bottom thickness H5 of the apex and the H4 is not greater than 2 mm.

9. The internal self-supporting tire suitable for all series of passenger vehicles according to claim 5, **characterized in that**, a width L of a lower bottom of the support rubber is calculated by the following formula:

$$L=SW*N*k+L2 \qquad (1)$$

wherein, SW is a nominal section width; N is an aspect ratio; k is a Safort factor which has a value within a range of 0.73-0.75.

**10.** The internal self-supporting tire suitable for all series of passenger vehicles according to claim 5, **characterized in that**, a value of $\alpha$ is within a range of 65º-75º, wherein $\alpha$ refers to an included angle between a connecting line of an endpoint of a rim width of a contour and an endpoint of a section width of the contour and a horizontal axis of a highest point of the contour of a tire section.

**11.** The internal self-supporting tire suitable for all series of passenger vehicles according to claim 10, **characterized in that**, the contour is designed by adopting a triangular balance theory design principle to ensure that:

$$\tan\alpha = 2USH/(SW-RW) \quad (2)$$

wherein, SW is a nominal section width with a fixed value, USH is a distance from a horizontal axis of the tire section to a bead in a free state of the tire, RW is the rim width.

**12.** The internal self-supporting tire suitable for all series of passenger vehicles according to claim 5, **characterized in that**, a deflection h is calculated by the following formula:

$$h = \tan\beta * TDW/2 \quad (3)$$

wherein, TDW is a designed tread width, and a value of $\beta$ is within a range of 3º-8º.

**13.** A building process for the internal self-supporting tire suitable for all series of passenger vehicles according to any one of claims 5-12, **characterized in that**, a first stage two-layer building drum is adopted, the first stage two-layer building drum has a drum expansion state and a drum shrinkage state, and in the drum expansion state, attaching an inside liner, support rubbers and the carcass together, setting bead bundles and performing turn-up, and attaching sidewalls; and
the first stage two-layer building drum rotates at a rotating speed of 80±10 r/min, and a rear pressing roller pressure is kept at 2-2.5 bar and performing translational roll-pressing at a transverse speed of 5-15 mm/sec to complete the building process.

**14.** The building process for the internal self-supporting tire suitable for all series of passenger vehicles according to claim 13, **characterized in that**, the building drum comprises a large-diameter drum plate, a large-diameter drum plate adjusting ring, a small-diameter drum plate, and a small-diameter drum plate adjusting ring, wherein the large-diameter drum plate is connected with the small-diameter drum plate by T-shaped bolts, the large-diameter drum plate adjusting ring cooperates with the large-diameter drum plate to adjust a use width of the large-diameter drum plate, the small-diameter drum plate adjusting ring cooperates with the small-diameter drum plate to adjust a use width of the small-diameter drum plate, and the use width X of the large-diameter drum plate is calculated by the following formula:

$$X = (1\#Belt - 2*L2) + 2N \quad (4),$$

1#Belt is a design width of 1# belt, and N is a width of a building drum profile of the large-diameter drum plate and is selected within a range of 30mm≤N≤60mm according to a tire size;
a central platform of the large-diameter drum plate is transitioned to a platform of the small-diameter drum plate on two sides by linear smooth slopes, an inclination angle $\gamma$ of the platform is within a range of 10º-15º; the transitional position between the central platform and each of the slopes are designed to have a rounding radius which is 40 mm, and a edge of each of the slopes of the large-diameter drum plate is designed to have a small rounding radius which is 0.5 mm; each drum edge curve of the small-diameter drum plate is designed to be a buffer tangent arc transitioning between R1 and R2, and a radius ratio of R1 to R2 is 0.1.

**15.** The building process for the internal self-supporting tire suitable for all series of passenger vehicles according to claim 13, **characterized in that**, the building drum comprises a large-diameter drum plate, a small-diameter drum plate is contacted with a lower surface of the large-diameter drum plate, a width of a small-diameter platform of the small-diameter drum plate is greater than a width of a large-diameter platform of the large-diameter drum plate, two sides of an upper surface of the large-diameter drum plate are transitioned to a surface of the small-diameter drum plate by linear smooth slopes, two sides from an upper surface to a lower surface of the small-diameter drum plate are transitioned by a first arc R1 and a second arc R2, and the R1 is tangent to the R2.

**16.** The building process for the internal self-supporting tire suitable for all series of passenger vehicles according to claim 15, **characterized in that**, a use width X of the large-diameter drum plate is calculated by the following formula:

$$X=(1\#Belt-2*L2)+2N \qquad (4),$$

1#Belt is a design width of 1# belt, and N is a width of a building drum profile of the large-diameter drum plate and is selected within a range of $30mm \leq N \leq 60mm$ according to a tire size.

**17.** The building process for the internal self-supporting tire suitable for all series of passenger vehicles according to claim 15, **characterized in that**, a large-diameter drum plate adjusting ring for adjusting a width of the large-diameter drum plate is disposed in a center of the large-diameter drum plate, and the large-diameter drum plate adjusting ring is set as a ring body around which a trapezoidal step is disposed; and a small-diameter drum plate adjusting ring for adjusting a width of the small-diameter drum plate is disposed in a center of the small-diameter drum plate, and the small-diameter drum plate adjusting ring is set as a ring body around which a trapezoidal step is disposed.

**18.** The building process for the internal self-supporting tire suitable for all series of passenger vehicles according to claim 15, **characterized in that**, an included angle $\gamma$ between each of the slopes on two sides of the large-diameter drum plate and the surface of the small-diameter drum plate is set as 10º-15º.

**19.** The building process for the internal self-supporting tire suitable for all series of passenger vehicles according to claim 15, **characterized in that**, a radius ratio of the first arc to the second arc is R1/R2=0.1.

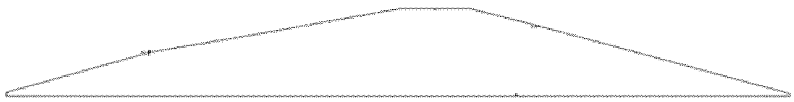

Fig. 1

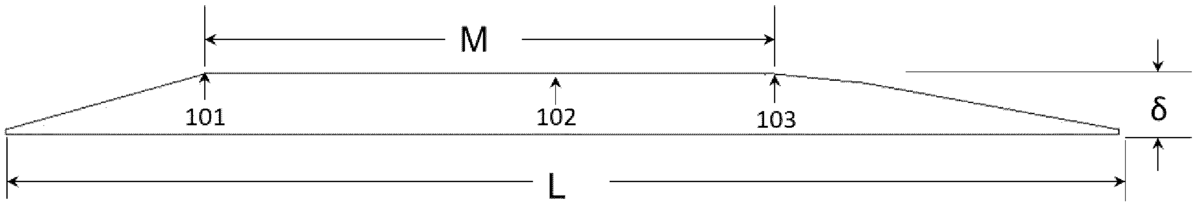


Fig. 2

| NO. | ordinary tire | scheme A (4 mm) | scheme B (6 mm) | scheme C (5 mm) |
|---|---|---|---|---|
| 1 | 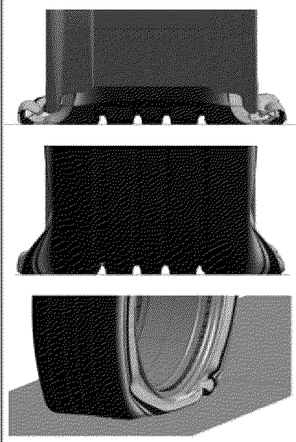 | 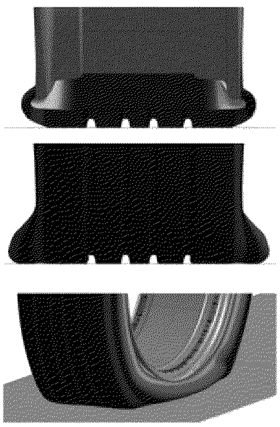 | 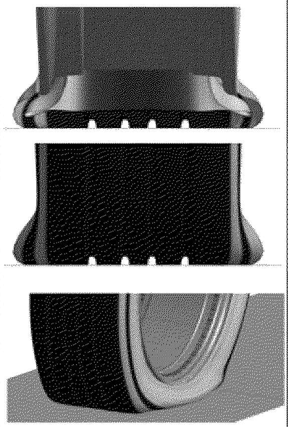 | 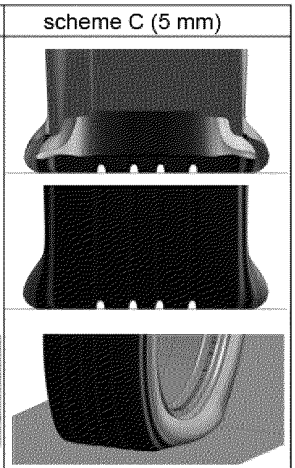 |
| Note | The lower sidewalls could not support load due to insufficient strength and didn't simulate to the specified load. | The lower sidewalls could not support load due to insufficient strength and didn't simulate to the specified load. | Need to optimize heat generation continuously. | Need to optimize heat generation continuously. |

Fig. 3

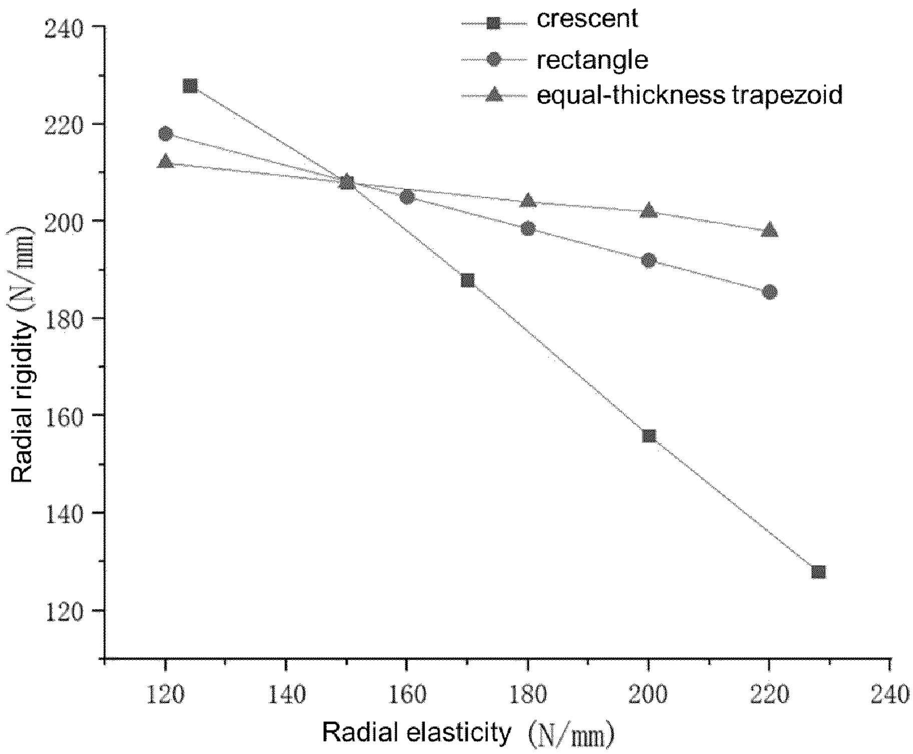
crescent
rectangle
equal-thickness trapezoid
240
220
200
180
160
140
120
Radial rigidity (N/mm)
120
140
160
180
200
220
240
Radial elasticity (N/mm)

Fig. 4

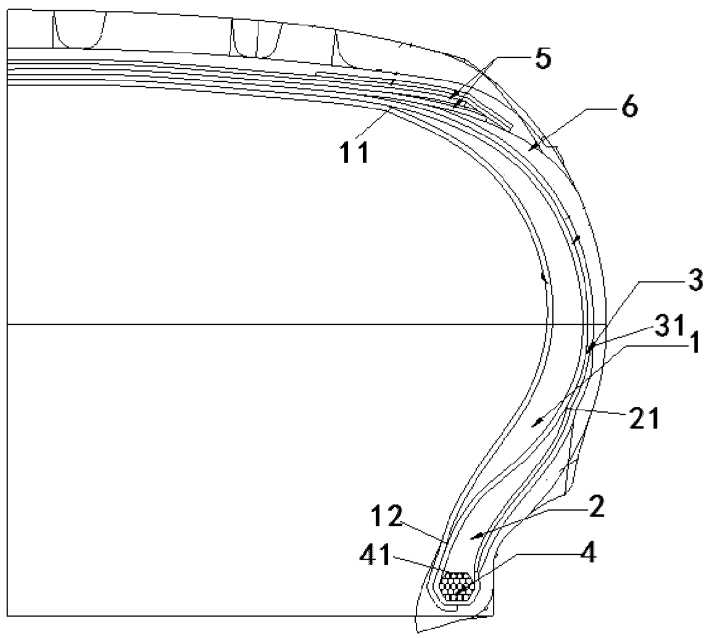
5
6
11
3
31
1
21
12
2
41
4

Fig. 5

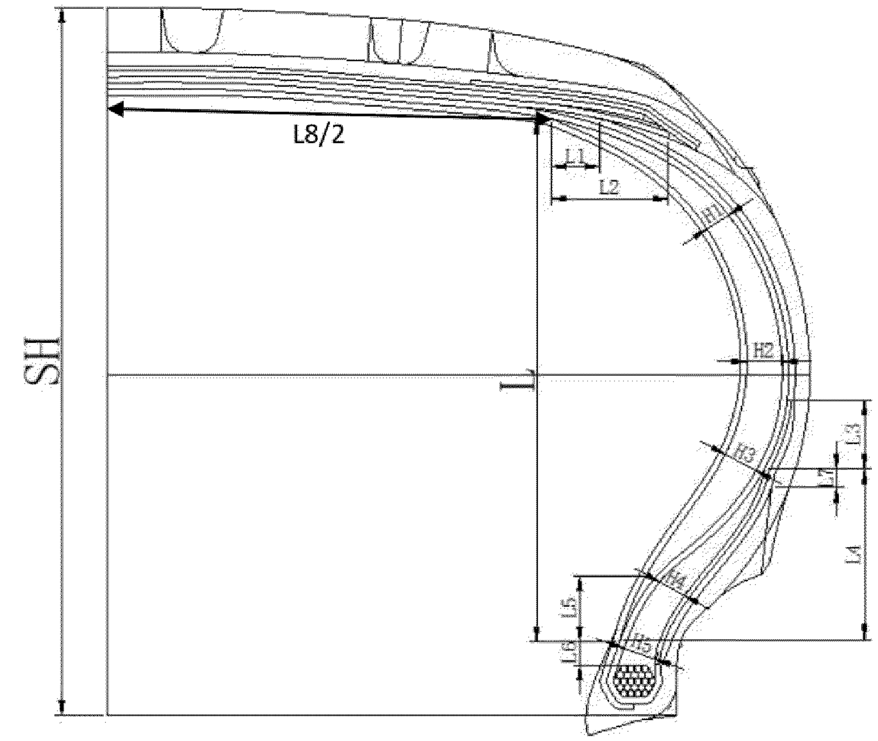


Fig. 6

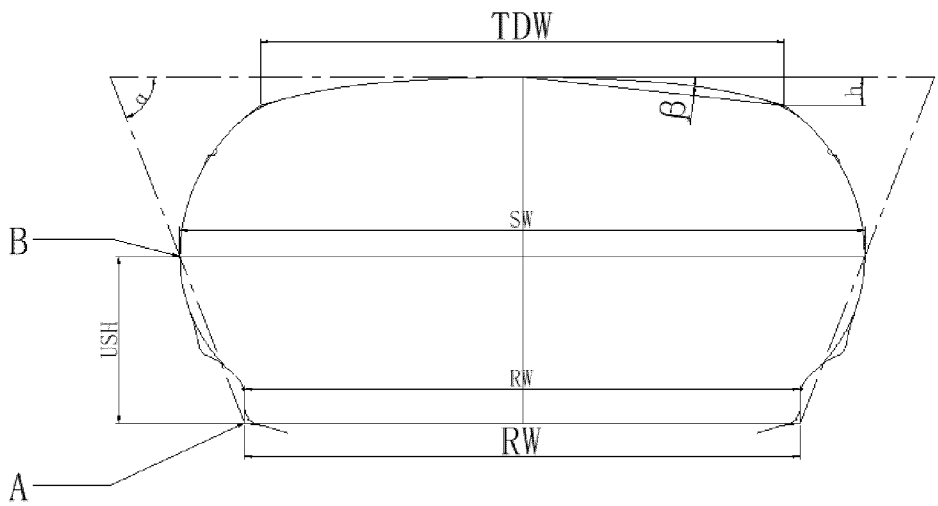


Fig. 7

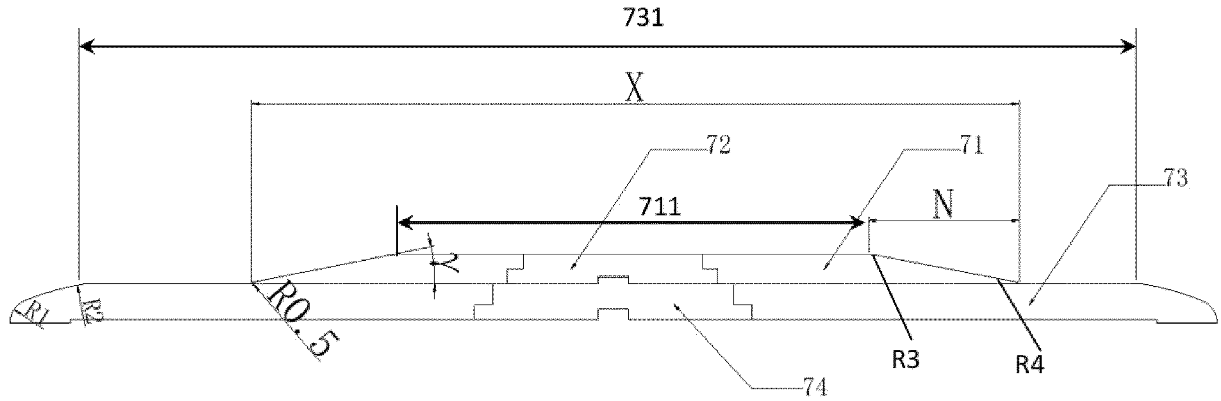


Fig. 8

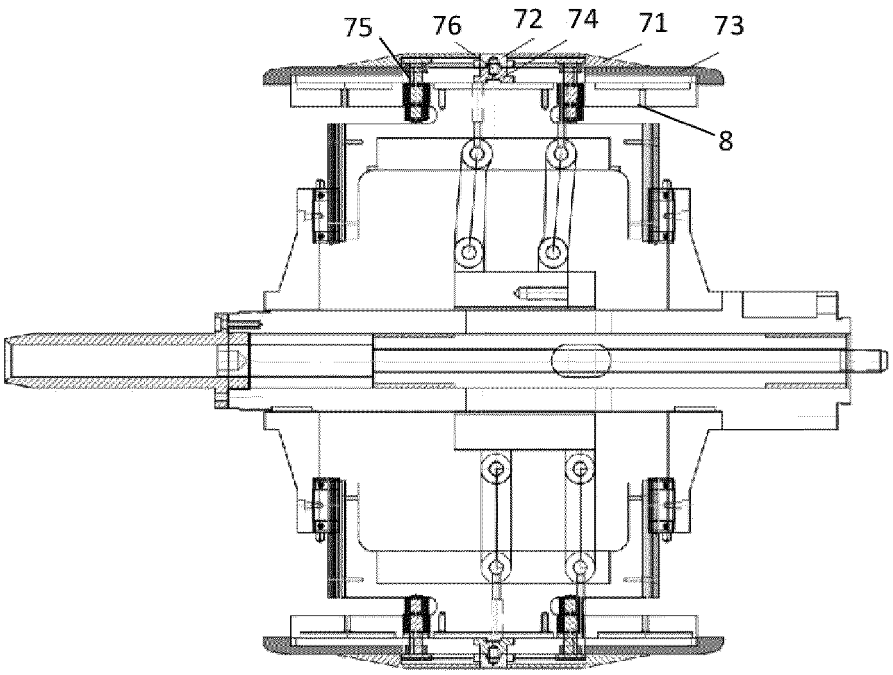


Fig. 9

**INTERNATIONAL SEARCH REPORT**

International application No. **PCT/CN2022/131664**

**A. CLASSIFICATION OF SUBJECT MATTER**

B60C 9/02(2006.01)i；B60C 9/18(2006.01)i；B60C 15/04(2006.01)i；B60C 17/06(2006.01)i

According to International Patent Classification (IPC) or to both national classification and IPC

**B. FIELDS SEARCHED**

Minimum documentation searched (classification system followed by classification symbols)

B60C, B29D

Documentation searched other than minimum documentation to the extent that such documents are included in the fields searched

Electronic data base consulted during the international search (name of data base and, where practicable, search terms used)

CNTXT, CNKI, WPABS, DWPI: 车辆, 轮胎, 支撑胶, 三角胶, 补强层, 梯形, 上底, 下底, 厚度, 硬度, 弹性模量; vehicle, tire, support+, rubber, trapezoidal, upper bottom, lower bottom, thickness, hardness, elasticity modulus

**C. DOCUMENTS CONSIDERED TO BE RELEVANT**

| Category* | Citation of document, with indication, where appropriate, of the relevant passages | Relevant to claim No. |
|---|---|---|
| PX | CN 114312168 A (QINGDAO DOUBLESTAR TIRE INDUSTRIAL CO., LTD.) 12 April 2022 (2022-04-12)<br>claims 1-3 and 6 | 1-4 |
| PX | CN 114347725 A (QINGDAO DOUBLESTAR TIRE INDUSTRIAL CO., LTD.) 15 April 2022 (2022-04-15)<br>claims 1-10, and description, paragraphs 0038-0045, and figures 1-6 | 5-19 |
| Y | CN 106739842 A (SAILUN CO., LTD.) 31 May 2017 (2017-05-31)<br>description, paragraphs 0005-0061, and figures 1-3 | 1-3, 5-8, 10-19 |
| Y | CN 101678716 A (SUMITOMO RUBBER INDUSTRIES, LTD.) 24 March 2010 (2010-03-24)<br>description, page 7, paragraph 1, and figure 1 | 1-3, 5-8, 10-19 |
| Y | CN 113400700 A (TTA (QINGDAO) TIRE TECHNOLOGY CO., LTD.) 17 September 2021 (2021-09-17)<br>description, paragraphs 0007-0091, and figures 1-2 | 13-19 |
| Y | CN 110194028 A (QINGDAO DOUBLESTAR TIRE INDUSTRIAL CO., LTD.) 03 September 2019 (2019-09-03)<br>description, embodiment 1, and figures 1-4 | 13-19 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 December 2022** | **28 January 2023** |
| Name and mailing address of the ISA/CN<br>**China National Intellectual Property Administration (ISA/CN)**<br>**No. 6, Xitucheng Road, Jimenqiao, Haidian District, Beijing 100088, China**<br>Facsimile No. **(86-10)62019451** | Authorized officer<br><br>Telephone No. |

Form PCT/ISA/210 (second sheet) (January 2015)

**INTERNATIONAL SEARCH REPORT**

International application No.
**PCT/CN2022/131664**

**C. DOCUMENTS CONSIDERED TO BE RELEVANT**

| Category* | Citation of document, with indication, where appropriate, of the relevant passages | Relevant to claim No. |
|---|---|---|
| A | JP 2009126410 A (SUMITOMO RUBBER INDUSTRIES) 11 June 2009 (2009-06-11) entire document | 1-19 |
| A | CN 111731044 A (ANHUI GITI RADIAL TIRE CO., LTD.) 02 October 2020 (2020-10-02) entire document | 1-19 |
| A | WO 2007125908 A1 (BRIDGESTONE CORP. et al.) 08 November 2007 (2007-11-08) entire document | 1-19 |

Form PCT/ISA/210 (second sheet) (January 2015)

**INTERNATIONAL SEARCH REPORT**
**Information on patent family members**

International application No.
**PCT/CN2022/131664**

| Patent document cited in search report | | | Publication date (day/month/year) | Patent family member(s) | | | Publication date (day/month/year) |
|---|---|---|---|---|---|---|---|
| CN | 114312168 | A | 12 April 2022 | None | | | |
| CN | 114347725 | A | 15 April 2022 | None | | | |
| CN | 106739842 | A | 31 May 2017 | None | | | |
| CN | 101678716 | A | 24 March 2010 | EP | 2151332 | A1 | 10 February 2010 |
| | | | | WO | 2008149725 | A1 | 11 December 2008 |
| | | | | KR | 20100019525 | A | 18 February 2010 |
| | | | | US | 2010116391 | A1 | 13 May 2010 |
| | | | | RU | 2009141934 | A | 20 July 2011 |
| | | | | JP | 2008296831 | A | 11 December 2008 |
| | | | | BR | PI0811133 | A2 | 24 September 2019 |
| CN | 113400700 | A | 17 September 2021 | None | | | |
| CN | 110194028 | A | 03 September 2019 | None | | | |
| JP | 2009126410 | A | 11 June 2009 | None | | | |
| CN | 111731044 | A | 02 October 2020 | None | | | |
| WO | 2007125908 | A1 | 08 November 2007 | JP | 2007290193 | A | 08 November 2007 |
| | | | | US | 2009095407 | A1 | 16 April 2009 |
| | | | | CN | 101432128 | A | 13 May 2009 |
| | | | | DE | 602007013741 | D1 | 19 May 2011 |
| | | | | EP | 2014453 | A1 | 14 January 2009 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202210099470
- CN 202210099281
- CN 202220235581